Europäisches Patentamt

(19) European Patent Office

Office européen des brevets

(11) Publication number: **0 035 288**
**B1**

(12) **EUROPEAN PATENT SPECIFICATION**

(45) Date of publication of patent specification: **11.09.85**

(21) Application number: **81200104.8**

(22) Date of filing: **27.03.79**

(60) Publication number of the earlier application in accordance with Art. 76 EPC: **0 004 476**

(51) Int. Cl.⁴: **G 11 B 7/08, G 11 B 7/00**

(54) **Optical tracking method and system.**

(30) Priority: **27.03.78 US 890670**

(43) Date of publication of application:
**09.09.81 Bulletin 81/36**

(45) Publication of the grant of the patent:
**11.09.85 Bulletin 85/37**

(84) Designated Contracting States:
**BE CH DE FR GB IT NL SE**

(56) References cited:
**DE-A-2 715 573**
**US-A-3 854 015**
**US-A-4 057 832**

**Patents Abstracts of Japan, vol. 2, no. 32, 28 February 1978, page 12351E77**

**Information Display, vol. 12, no. 2, April 1976, pages 12-19**

(73) Proprietor: **DISCOVISION ASSOCIATES**
**3300 Hyland Avenue**
**Costa Mesa California 92626 (US)**

(72) Inventor: **Ceshkovsky, Ludwig**
**10435, Morning Glory Avenue**
**Fountain Valley California (US)**
Inventor: **Dakin, Wayne Ray**
**816, Camino Real**
**No. 20, Redondo Beach California (US)**

(74) Representative: **Arthur, George Fitzgerald et al**
**KILBURN & STRODE 30, John Street**
**London WC1N 2DD (GB)**

## Description

This invention relates to tracking systems and methods for use in a player apparatus for recovering information recorded on a video disc or other information bearing surface.

This application is one of a series of related cases having some disclosure in common; all are concerned with aspects of reading optical discs. The cases are EP—A—4 476 (the parent case) and divisional applications EP—A—35 287, EP—A—35 288, EP—A—35 803, EP—A—36 222. EP—A—4 476 is concerned with correcting time base errors by comparing the phase of a signal from the disc with a reference signal and moving the impingement location of the readout beam on the disc in a direction along the track to counteract the erros; the result of the comparison is altered in response to the radial location of the beam. EP—A—35 287 is concerned with correction for the non-uniform gain of the optical system used during reading; a reference signal of predetermined amplitude and lying in a first portion of the recorded frequency spectrum is detected on readout and compared with a further reference amplitude to give an error signal, the latter being used to control a frequency selective variable gain amplifier and thus compensate for incorrect gain in other portions of the recorded frequency spectrum. The present case, EP—A—35 288, is concerned with track changing, a track following loop being disconnected before a jump signal is applied to the beam steering means and a compensation signal being applied to that means to decelerate the beam as it approaches the desired track; the track following loop is reconnected before that track is reached, so as to co-operate with the compensation signal. EP—A—35 803 concerns a disc rotation spindle servo system having a spindle tachometer and a reference frequency source; the tachometer has two independent tachometer elements indicating the spindle rotation, two error signals being produced by comparing the signals from these elements with the reference frequency and the spindle motor being controlled in response to the sum of those error signals. EP—A—36 222 is concerned with focus acquisition in a focus system using both focus and information detectors; it imposes a relatively high frequency oscillation on the movement of the focusing lens when focus is being sought.

An object of the present invention is to enable the beam to move quickly from one track to another, for example in a jump or stop motion mode of operation where a still picture is to be displayed. According to the invention, player apparatus includes a tracking system as set out in claim 5. In summary the apparatus includes optical means for producing a source beam of radiation to impinge upon the surface and moving means for causing relative movement between the surface and the source beam to cause the beam to scan the surface along any one of the tracks, the tracking system comprising a tracking error detector beam steering means for steering the source beam along a path defined by a first information track, and control means coupled to the beam steering means for selectively disconnecting the tracking error detector from said beam steering means and for coupling a jump signal to said beam steering means to cause the beam to move away from the first information track towards a second track, said control means also causing the termination of the jump signal when an intermediate position of its beam between tracks is detected, and the coupling of a fixed duration compensation signal to said beam steering means to decelerate the beam, following which the compensation signal and the tracking system co-operate to stop the beam on the second track.

The invention also includes a corresponding method of tracking, as set out in claim 1.

Kappert's U.S. Patent Specification No. 4,057,832 discloses a jump motion system in which the radial drive mechanism receives a pulse in the interval between frames for moving to an adjacent track; the width of the pulse is twice that corresponding to the distance from the track being followed to the mid-point between tracks in order to compensate for local variation in the space between tracks.

Janssen's U.S. Patent Specification No. 3,854,015 discloses another jump motion system which uses a fixed length compensation signal, but that is in combination with a jump pulse of fixed length, rather than one terminating at a detected intermediate position of the beam between tracks.

In those specifications, a tracking system was disconnected during the whole of a jump, but there was no teaching of the idea of using the tracking system to help to stop the beam on the second track.

The invention may be carried into practice in various ways, and one embodiment will be described by way of example, with reference to the accompanying drawings in which:—

FIGURE 1 is identical with FIGURE 1 of the parent application and is a generalised block diagram of a video disc player;

FIGURE 2 is a schematic diagram of the optical system employed in the video disc player shown in FIGURE 1; and is identical with FIGURE 2 of the parent application;

FIGURE 3 is a block diagram view of the signal recovery subsystem employed in the video disc player shown in FIGURE 1;

FIGURE 4 shows a plurality of waveforms and one sectional view used in explaining the operation of the signal recovery subsystem shown in FIGURE 3;

FIGURE 5 shows a block diagram of the tracking servo subsystem used in the video disc player shown in FIGURE 1;

FIGURE 6 shows a block diagram of the jump motion subsystem utilised in the video disc player of FIGURE 1; and

FIGURE 7A, 7B, and 7C show waveforms generated in the jump motion subsystem shown in FIGURE 6.

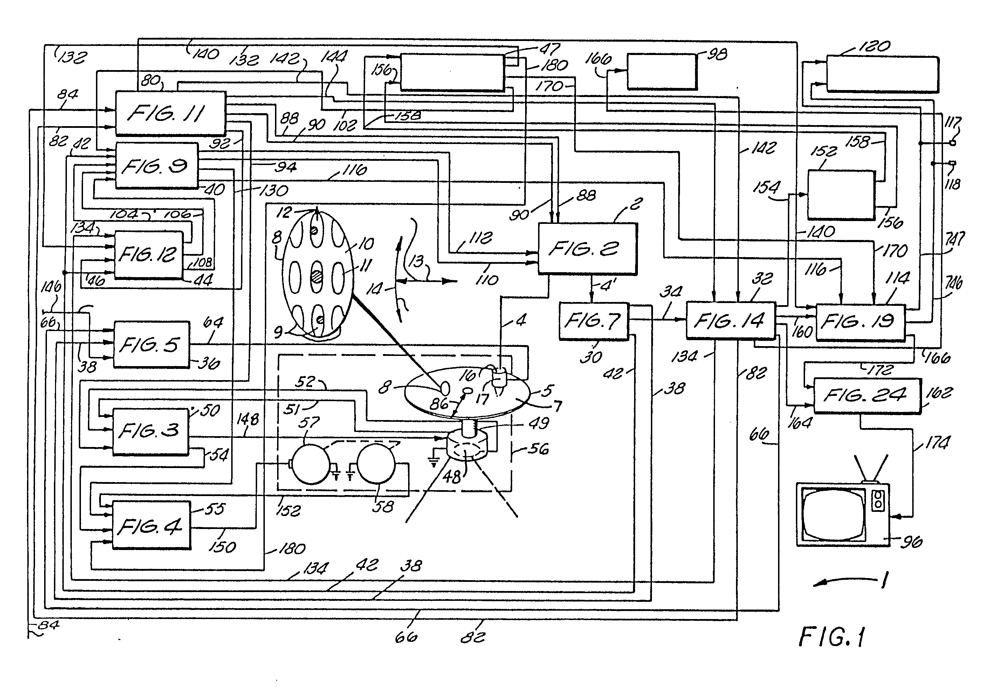

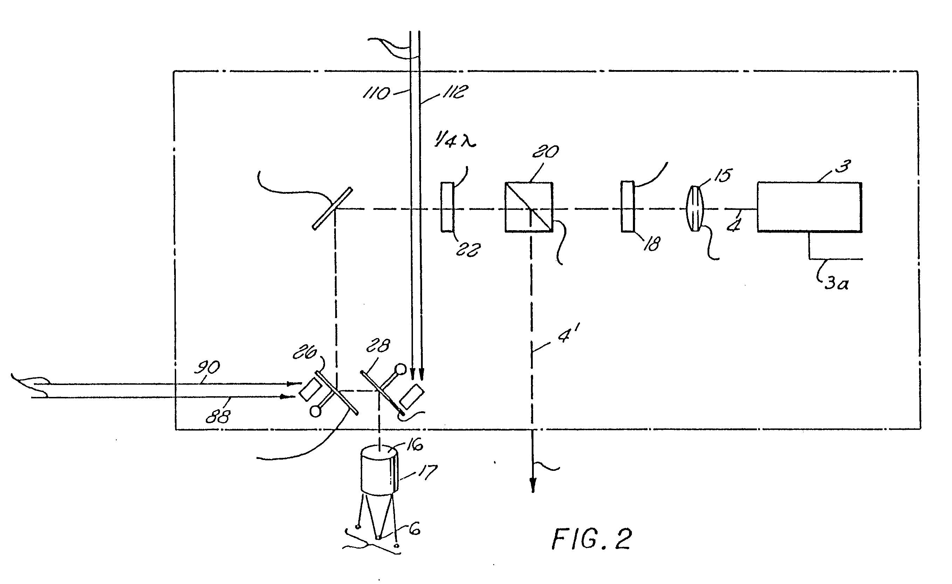

Referring to FIGURE 1, there is shown a schematic block diagram of a video disc player system indicated generally at 1. The player 1 employs an optical system indicated at 2 and shown in greater detail in FIGURE 2.

Referring collectively to FIGURES 1 and 2, the optical system 2 includes a read laser 3 employed for generating a read beam 4 which is used for reading a frequency modulated encoded signal stored on a video disc 5. The read beam 4 is polarised in a predetermined direction. The read beam 4 is directed to the video disc 5 by the optical system 2. An additional function of the optical system 2 is to focus the light beam down to a spot 6 at its point of impingement with the video disc 5.

A portion of an information bearing surface 7 of the video disc 5 is shown enlarged within a circle 8. A plurality of information tracks 9 are formed on the video disc 5. Each track is formed with successive light reflective regions 10 and light non-reflective regions 11. The direction of reading is indicated by an arrow 12. The read beam 4 has two degrees of movement, the first of which is in the radial direction as indicated by a double headed arrow 13; the second of which is the tangential direction as indicated by a double headed arrow 14. The double heads of each of the arrows 13 and 14 indicate that the read beam 4 can move in both directions in each of the radial and tangential directions.

Referring to FIGURE 2, the optical system comprises a lens 15 employed for shaping the beam to fully fill an entrance aperture 16 of a microscopic objective lens 17. The objective lens is employed for forming the spot 6 of light at its points of impingement with the video disc 5. Improved results have been found when the entrance aperture 16 is overfilled by the reading beam 4. This results in maximum light intensity at the spot 6.

For further details of the apparatus of FIGURE 1, reference may be made to publication No. 4476.

The present invention is concerned with the tracking subsystem 40, 44 employed in the video disc player 1.

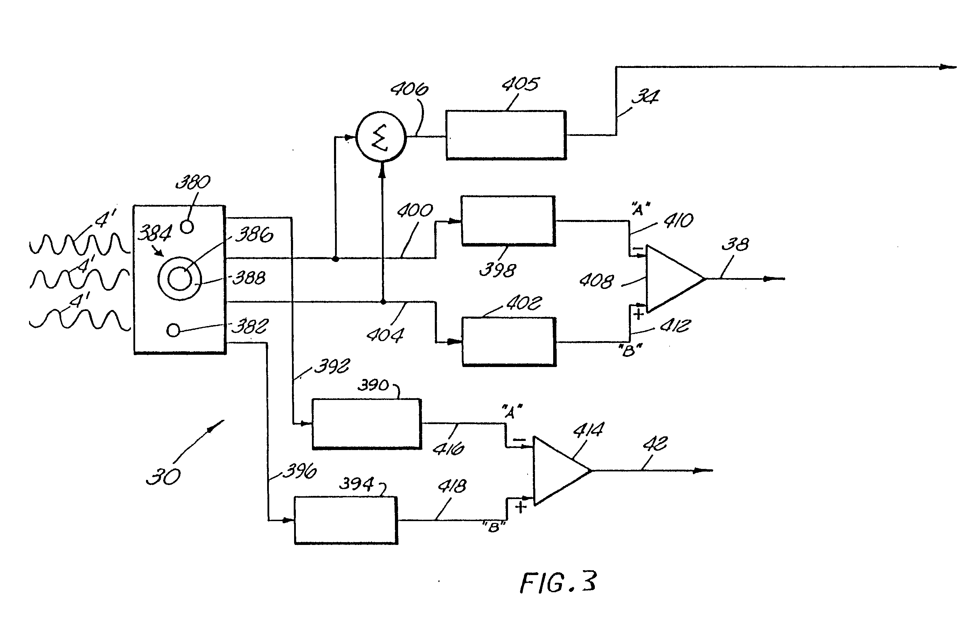

Referring to FIGURE 3, there is shown a schematic block diagram of the signal recovery subsystem 30.

The reflected light beam is indicated at 4' and is divided into three principal beams. A first beam impinges upon a first tracking photodetector indicated at 380, a second portion of the read beam 4' impinges upon a second tracking photodetector 382 and the central information beam is shown impinging upon a concentric ring detector indicated generally at 384. The concentric ring detector 384 has an inner portion at 386 and an outer portion at 388, respectively.

The output from the first tracking photodetector 380 is applied to a first tracking preamp 390 over a line 392. The output from the second tracking photodetector 382 is applied to a second tracking preamp 394 over a line 396.

The output from the first tracking preamplifier 390 forms one input to a differential amplifier 414 over a line 416. The output from the second tracking preamplifier 394 forms a second input to the differential amplifier 414 over a line 418. The output from the differential amplifier 414 is a differential tracking error signal applied to the tracking subservo system over the line 42 and applied to the stop motion subsystem over the lines 42 and 46.

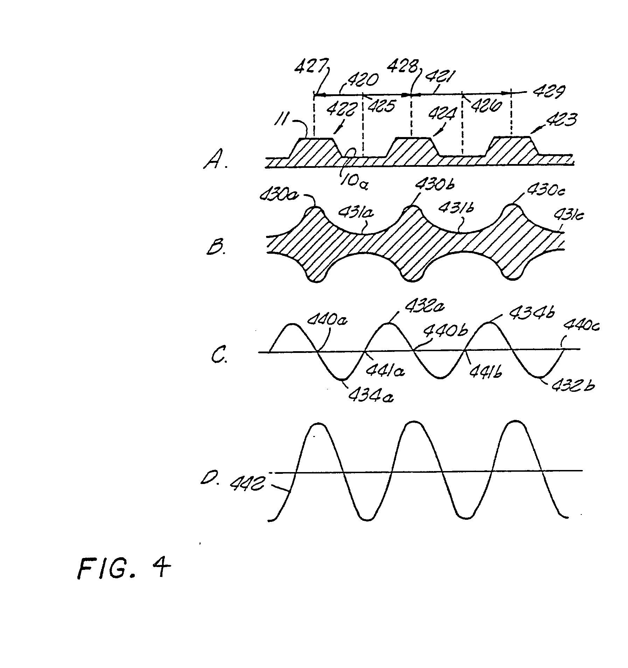

Line A of FIGURE 4 shows a cross-sectional view taken in a radial direction across a video disc 5. Light non-reflective elements are shown at 11 and intertrack regions are shown at 10a. Such intertrack regions 10a are similar in shape to light reflective elements 10. The light reflective regions 10 are planar in nature and normally are highly polished surfaces, such as a thin aluminium layer. The light nonreflective regions 11 in the preferred embodiment are light scattering and appear as bumps or elevations above the planar surface represented by the light reflective regions 10. The lengths of the line indicated at 420 and 421 shows the centre-to-centre spacing of two adjacently positioned tracks 422 and 423 about a central track 424. A point 425 in the line 420 and a point 426 in the line 421 represents the crossover point between each of the adjacent tracks 422 and 423 when leaving the central track 424 respectively. The crossover points 425 and 426 are each exactly halfway between the central track 24 and the track 422 and 423 respectively. The end points of line 420 represented at 427 and 428 represent the centre of information tracks 422 and 424, respectively. The end of line 421 at 429 represents the centre of information track 423.

The waveform shown in line B of FIGURE 4 represents an idealised form of the frequency modulated signal output derived from the modulated light beam 4' during radial movement of the read beam 6 across the tracks 422, 424 and 423. This shows that a maximum frequency modulated signal is available at the area indicated generally at 430a, 430b, and 430c which correspond to the centres 427, 428 and 429 of the information tracks 422, 424, and 423, respectively. A minimum frequency modulated signal is available at 431a, and 431b which corresponds to the crossover points 425 and 426. The waveform shown on line B of FIGURE 4 is generated by radially moving a focused lens across the surface of the video disc 5.

Referring to line C of Figure 4, there is shown the differential tracking error signal generated in the differential amplifier 414 shown in FIGURE 3.

The differential tracking error signal output shows a first maximum tracking error at a point indicated at 432a and 432b which is intermediate the centre 428 of an information track 424 and the crossover point indicated at 425 or 426 depending on the direction of beam travel from the central track 424. A second maximum tracking error is also shown at 434a and 434b corresponding to track locations intermediate the crossover points 425 and 426 between the information track 424 and the next adjacent tracks 422 and 423. Minimum focus error is shown in line C at 440a, 440b, and 440c corresponding to the centre of the information tracks 422, 424, and 423, respectively. Minimum tracking error signals are also shown at 441a, and 441b corresponding to the crossover points 425 and 426 respectively.

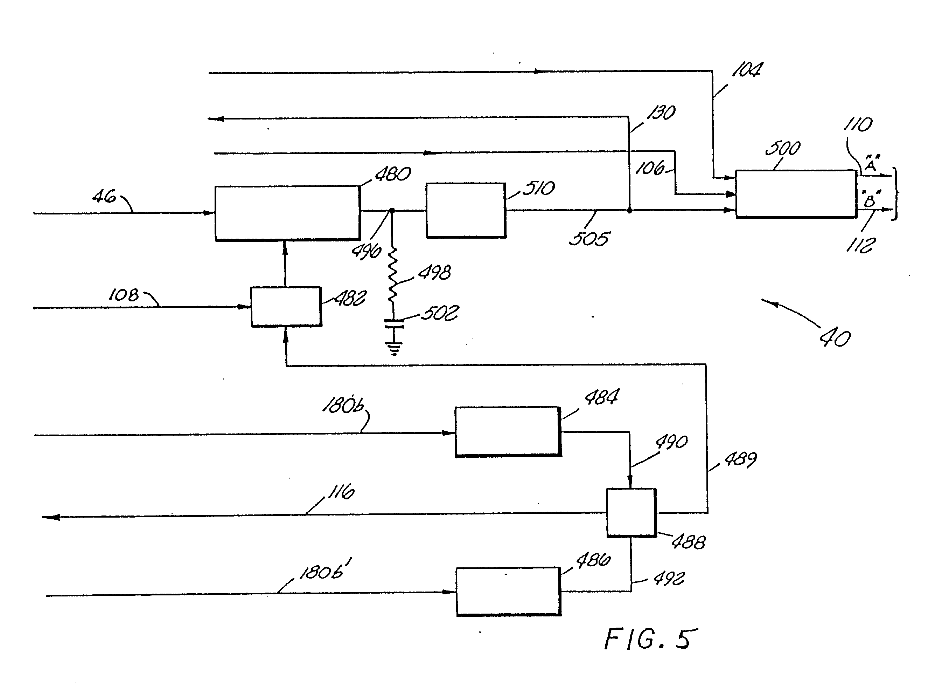

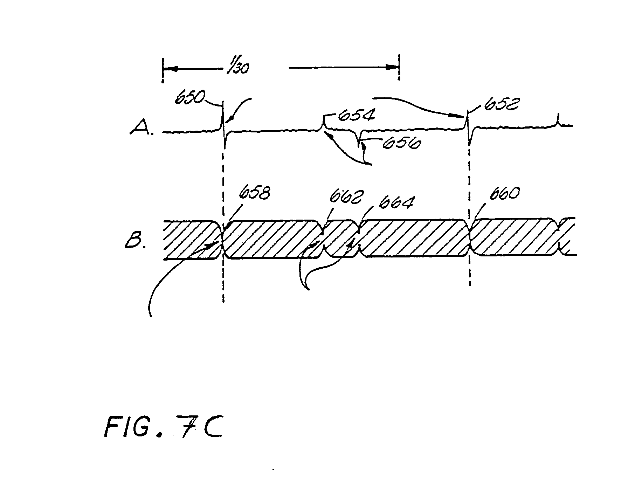

Referring to FIGURE 5, there is shown a schematic block diagram of the tracking servo subsystem 40 employed in the video disc player 1. The differential tracking error signal is applied to a tracking servo loop interrupt switch 480, over the line 46 from the signal recovery subsystem 30. The loop interrupt signal is applied to a gate 482 over the line 108 from a jump motion subsystem 44. An open fast loop command signal is applied to an open loop fast gate 484 over a line 180b from a function generator 47. The function generator includes both a remote control unit from which commands are received and a set of console switches from which commands can be received.

The console switch is shown connected to an open loop fast gate 486 over the line 180b'. The fast reverse command from the remote control portion of the function generator 47 is applied to an open loop fast gate 484 over the line 180b. The fast reverse command from the console portion of the function generator 47 is applied to another open loop fast gate 486 over the line 180b'. The output from the gate 484 is applied to an OR gate 488 over a line 490. The output from the open loop fast gate 486 is applied to the OR gate 488 over a line 492. The first output from the OR gate 488 is applied to the audio processing system 114 to provide an audio squelch output signal on the line 116. A second output from the OR gate 488 is applied over the line 489 to the gate 482 as a gating signal. The output from the tracking servo interrupt loop switch 480 is applied to a junction 496 connected to one side of a resistor 498 and as an input through an amplifier and frequency compensation network 510 to a tracking mirror amplifier driver 500 over a line 505. The other end of the resistor 498 is connected to one side of a capacitor 502. The other side of the capacitor 502 is connected to ground. The amplifier 500 receives a second input signal from the jump motion subsystem 44 over the line 106. The signal on the line 106 is a jump motion compensation pulse. A further input to the amplifier 500 is a jump motion pulse on the line 104 from the jump motion subsystem 44.

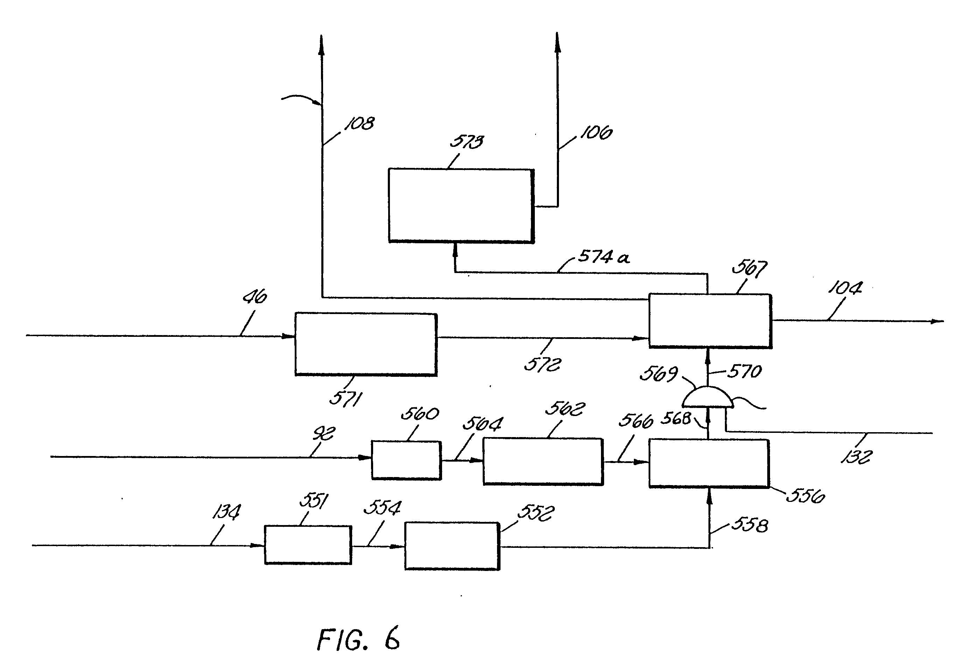

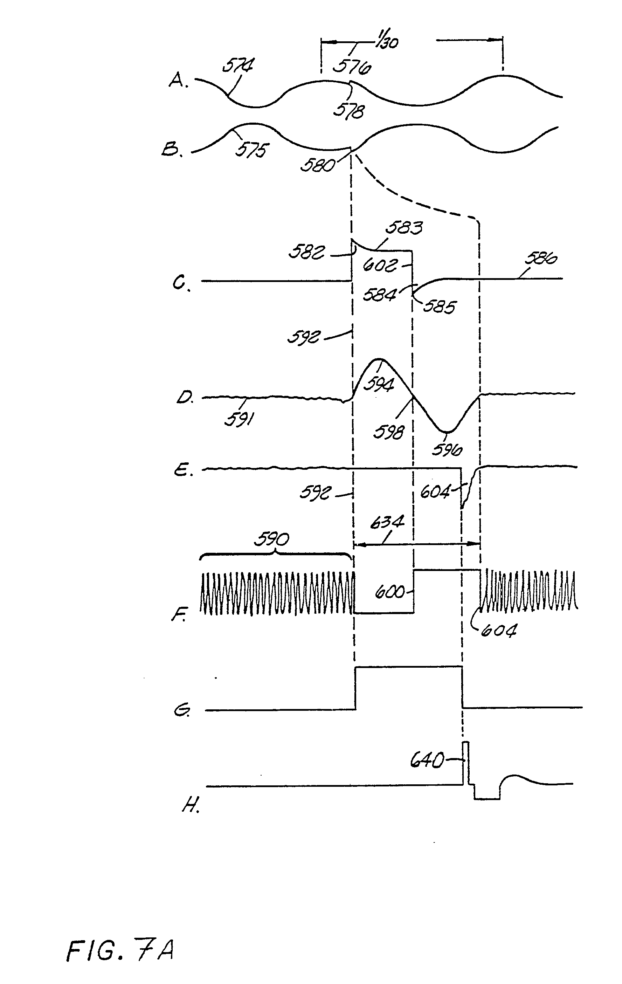

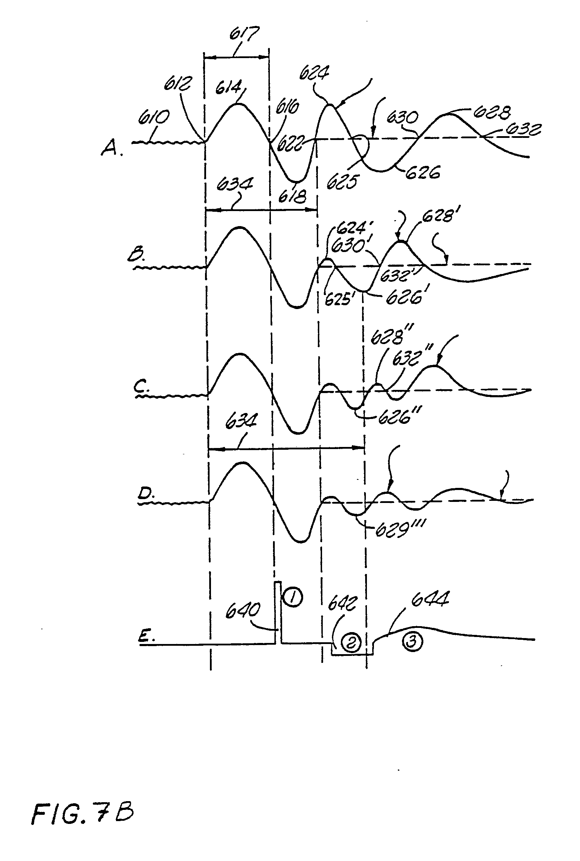

A DC component of the tracking error, developed over the combination of the resistor 498 and capacitor 502, is supplied to the carriage servo system 55 during normal tracking periods over the line 130. The DC component from the junction 496 is gated to the carriage servo 55 by the play enabling signal from the function generator 47. The push/pull amplifier 500 generates a first tracking A signal for the radial tracking mirror 28 over the line 110 and generates a second tracking B output signal to the radial tracking mirror 28 over the line 112. The radial mirror requires a maximum of 600 volts across the mirror for maximum operating efficiency when bimorph type mirrors are used. Accordingly, the push/pull amplifier 500 comprises a pair of amplifier circuits, each one providing a three hundred voltage swing for driving the tracking mirror 28. Together, they represent a maximum of six hundred volts peak to peak signal for application over the lines 110 and 112 for controlling the operation of the radial tracking mirror 28. For a better understanding of the tracking servo subsystem 40, the description of its detailed mode of operation is combined later with the detailed description of the operation of the jump motion subsystem 44 shown with reference to Figure 6 and the waveforms shown in Figures 7A, 7B and 7C.

## Tracking Servo Subsystem — Normal Mode of Operation

The video disc 5 being played on the video disc player 1 contains approximately eleven thousand information tracks per inch. The distance from the centre of one information track to the next adjacent information track is in the range of 1.6 microns. The information indicia aligned in an information track is approximately 0.5 microns in width. This leaves approximately one micron of empty and open space between the outermost regions of the indicia positioned in adjacent information bearing tracks.

The function of the tracking servo is to direct the impingement of a focused spot of light to impact directly upon the centre of an information track. The focused spot of light is approximately the same width as the information bearing sequence of indicia which form an information track. Obviously, maximum signal recovery is achieved when the focused beam of light is caused to travel such that all or most of the light spot impinges upon the successively positioned light reflective and light non-reflective regions of the information track.

The tracking servo is further identified as the radial tracking servo because the departures from the information track occur in the radial direction upon the disc surface. The radial tracking servo is continuously operable in the normal play mode.

The radial tracking servo subsystem is interrupted or released from the differential tracking error signal generated from the FM video information signal recovered from the video disc 5 in certain modes of operation. In the first mode of operation, when the carriage servo is causing the focused read beam to radially traverse the information bearing portion of the video disc 5, the radial tracking servo subsystem 40 is released from the effects of the differential tracking error signal because the radial movement of the reading beam is so rapid that tracking is not thought to be necessary. In a jump back mode of operation wherein the focused reading beam 4 is caused to jump from one track to an adjacent track, the differential tracking error is removed from the radial tracking servo loop for eliminating signals from the tracking mirror drivers which tend to unsettle the radial mirror and tend to require a longer period of time prior to the radial tracking servo subsystem to reacquire proper tracking of the next adjacent information track. In this embodiment of operation where the differential tracking error is removed from the tracking mirror drivers, a substitute pulse is generated for giving a clean unambiguous signal to the tracking mirror drivers to direct the tracking mirror to move to its next assigned location. This signal is identified as the jump motion pulse and comprises regions of pre-emphasis at the beginning and end of the jump motion pulse which are tailored to direct the tracking mirror drivers to move the focused spot to the predetermined next track location and to help maintain the focused spot in the proper tracking position.

The jump motion pulse which is employed for directing the focused beam to leave a first information track and depart for a second adjacent information is used in a combination with a compensation signal applied directly to the radial tracking mirrors after the termination of the jump motion pulse, to direct the mirrors to the next adjacent track.

Th differential tracking error signal is interrupted for a period less than the time necessary to perform the jump motion, and the portion of the differential tracking error allowed to pass into the tracking mirror drivers is calculated to assist the radial tracking mirrors to achieve proper radial tracking.

FIGURE 6 shows a block diagram of the jump motion subsystem 44 employed in the video disc player 1. The waveforms shown with reference to FIGURES 7A, B, and C are used in conjunction with the block diagram shown in FIGURE 6 to explain the operation of the stop motion system. The video signal from the FM processing unit 32 is applied to an input buffer stage 551 over the line 134. The output signal from the buffer 551 is applied to a DC restorer 552 over a line 554. The function of the DC restorer 552 is to set the blanking voltage level at a constant uniform level. Variations in signal recording and recovery often result in video signals available on the line 134 with different blanking levels. The output from the DC restorer 552 is applied to a white flag detector 556 over a line 558. The function of the white flag detector 556 is to identify the presence of an all white level video signal existing during an entire line of one or both fields contained in a frame of television information. While the white flag detector has been described as detecting an all white video signal during a complete line interval of a frame of television information, the white flag may take other forms. One such form would be a special number stored in a line. Alternatively, the white flag detector can respond to the address indicia found in each video frame for the same purpose. Other indicia can also be employed. However, the use of an all white level signal during an entire line interval in the television frame of information has been found to be the most reliable.

The vertical sync signal from the tangential servo subsystem 80 is aplied to a delay circuit 560 over the line 92. The output from the delay circuit 560 is supplied to a vertical window generator 562 over a line 564. The function of the window generator 562 is to generate an enabling signal for application to the white flag detector 556 over the line 566 to coincide with that line interval in which the white flag signal has been stored. The output signal from the generator 562 gates the predetermined portion of the video signal from the FM detector and generates an output white flag pulse whenever the white flag is contained in the portion of the video signal under surveillance. The output from the white flag detector 556 is applied to a stop motion pulse generator 567 over a line 568, a gate 569 and a further line 570. The gate 569 has as a second input signal, over the line 132, the JUMP MOTION MODE enabling signal from the function generator 47.

The differential tracking error signal from the signal recovery subsystem 30 is applied to a zero crossing detector and delay circuit 571 over the lines 42 and 46. The function of the zero crossing detector circuit 571 is to identify when the lens crosses the mid-points 425 and/or 426 (Figure 4) between two adjacent tracks 424 and 423. It is important to note that the differential tracking signal output also indicates the same level signal at point 440c which identifies the optimum focusing point at which the tracking servo system 40 seeks to position the lens in perfect tracking alignment on the mid-point 429 of the track 423 when the tracking suddenly jumps from track 424 to track 423. Accordingly, a means must be provided for recognising the difference between points 441b and 440c on the differential error signal shown in line C of Figure 4.

The output of the zero crossing detector and delay circuit 571 is applied to the jump pulse generator 567 over a line 572. The jump pulse generated in the generator 567 is applied to a plurality of locations, the first of which is as a loop interrupt pulse to the tracking servo subsystem 40 over the line 108. A second output signal from the jump pulse generator 567 is applied to a jump compensation sequence generator 573 over a line 574a. The function of the stop motion compensation sequence generator 573 is to generate a compensation pulse waveform for application to the radial tracking mirror to co-operate with the actual jump pulse sent directly to the tracking mirror over the line 104. The stop motion compensation pulse is sent to the tracking servo over the line 106.

The tracking servo mirror gains sufficient inertia upon receiving a jump pulse for the focused spot from the mirror to jump from one track to the next adjacent track. The inertia of the tracking mirror under normal operation conditions causes the mirror to swing past the one track to be jumped. Briefly, the jump pulse on the line 104 causes the radial tracking mirror 28 to leave the track on which it is tracking and jump to the next sequential track. A short time later, the radial tracking mirror receives a stop motion compensation pulse to remove the added inertia and direct the tracking mirror into tracking the next adjacent track without skipping one or more tracks before selecting a track for tracking.

In order to ensure the optimum cooperation between the jump pulse from the generator 567 and the stop motion compensation pulse from the generator 573, the loop interrupt pulse on line 108 is sent to the tracking servo to remove the differential tracking error signal from being applied to the tracking error amplifiers 500 during the period of time that the mirror is purposely caused to leave one track under direction of the jump pulse from the generator 567 and to settle upon a next adjacent track under the direction of the stop motion compensation pulse from the generator 573.

As an introduction to the detailed understanding of the interaction between the jump subsystem 44 and the tracking servo subsystem 40, the waveform shown in Figures 7A, B and C are described.

Referring to line A of Figure 7A there are shown the normal tracking mirror drive signals to the radial tracking mirror 28. As previously discussed, there are two driving signals applied to the tracking mirror 28, a radial tracking A signal represented by a line 574 and a radial tracking B signal represented by a line 575. Since the information track is normally in the shape of a spiral, there is a continuous tracking control signal being applied to the radial tracking mirror for following the spiral shaped configuration of the information track. The time frame of the information shown in the waveform shown in line A represents more than a complete revolution of the disc. A typical normal tracking mirror drive signal waveform for a single revolution of the disc is represented by the length of the line indicated at 576. The two discontinuities shown at 578 and 580 on waveforms 574 and 575, respectively, indicate the portion of the normal tracking period at which a jump pulse is given. The jump pulse is represented by the small vertically disposed discontinuity present in the lines 574 and 575 at points 578 and 580, respectively. The remaining waveforms contained in Figures 7A, 7B and 7C are on an expanded time base and represent those electrical signals which occur just before the beginning of what may be called the jump back period, through the jump back period and continuing a short duration beyond the jump back period.

The jump pulse generated by the generator 567 and applied to the tracking servo subsystem 40 over the line 104 is represented on line C of Figure 7A. The pulse is ideally not a squarewave, but has areas of pre-emphasis located generally at 582 and 584. These areas of pre-emphasis insure optimum reliability in the jump motion subsystem 44. The pulse can be described as rising to a first higher voltage level during the initial period, and then gradually falling off to a second voltage level, as at 583. The level at 583 is maintained until the termination of the jump pulse, when the waveform falls to a negative voltage level at 585 below the zero voltage level at 586 and then rises gradually to the zero voltage level at 586.

Line D of Figure 7A represents the differential tracking error signal received from the signal recovery subsystem 30 over the lines 42 and 46. The waveform shown on line D of Figure 7A is a compensated differential tracking error achieved through the use of the combination of a jump pulse and a jump motion compensation pulse applied to the radial tracking mirror 28 according to the teaching of the present invention.

Line G of Figure 7A represents the loop interrupt pulse generated by the jump pulse generator 567 and applied to the tracking servo subsystem 40 over the line 108. As previously mentioned, it is best to remove the differential tracking error signal as represented by the waveform on line D from application to the radial tracking mirror 28 during the jump back period. The loop interrupt pulse shown on line G achieves this gating function. However, by inspection, it can be seen that the differential tracking error signal lasts for a period longer than the loop interrupt pulse shown on line G. The waveform shown on line E is the portion of the differential tracking error signal shown on line D which survives the gating by the loop interrupt pulse shown on line G. The waveform shown on line E is the compensated tracking error as interrupted by the loop interrupted pulse which is applied to the tracking mirror 28. Referring to line F, the high frequency signal represented generally under the bracket 590 indicates the output waveform of the zero crossing detector circuit 571 in the jump motion subsystem 44. A zero crossing pulse is generated each time the differential error tracking signal shown in line D of Figure 7A crosses through a zero bias level. While the information shown under the bracket 590 is helpful in maintaining the radial tracking mirror 28 in tracking a single information track, such information must be gated off at the beginning of the jump interval as indicated by the dashed lines 592 connecting the start of the jump pulse in line C of Figure 7A and the absence of zero crossing detector pulses shown on line F of Figure 7A. By referring again to line D, the differential tracking error signal rises to a first maximum at 594 and falls to a second opposite but equal maximum at 596. At point 598, the tracking mirror is passing over the zero crossing point 426 between two adjacent tracks 424 and 423 as shown with reference to line A of Figure 4. This means that the mirror has traveled half way from the first track 424 to the second track 423. At this point indicated by the number 598, the zero crossing detector generates an output pulse indicated at 600. The output pulse 600 terminates the jump pulse shown on line C as represented by the vertical line segment 602. This termination of the jump pulse starts the negative pre-emphasis period 584 as previously described.

The loop interrupt pulse is not affected by the output 600 of the zero crossing detector 571. The differential tracking error signal is prevented from being applied to the radial tracking mirror 28 too early in the jump back sequence before the radial tracking mirror 28 has settled down and acquired firm radial tracking of the desired track. As shown by reference to the waveform shown in line F, the zero crossing detector again begins to generate zero crossing pulses when the differential tracking error signal reappears as indicated at point 604. Referring to line H of Figure 7A there is shown a waveform representing the jump motion compensation sequence which begins coincidental with the end of the loop interrupt pulse shown on line G.

Referring to Figure 7B, there is shown a plurality of waveforms explaining the relationship between the jump pulse as shown on line C of Figure 7A, and the jump compensation pulse waveform as shown on the line H of Figure 7A and repeated for convenience on line E of Figure 7B. The compensation pulse waveform is used for generating a differential compensated tracking error as shown with reference to line D of Figure 7B.

Line A of Figure 7B shows the differential uncompensated tracking error signal as developed in the signal recovery subsystem 30. The waveform shown in line A represents the radial tracking error signal as the read beam makes an abrupt departure from an information track on which it was tracking and moves towards one of the adjacent tracks positioned on either side of the track being read. The normal tracking error signal, as the beam oscillates slightly down the information track, is shown at the region 610 of Line A. The tracking error represents the slight side to side (radial) motion of the read beam 4 to the successively positioned reflective and non-reflective regions on the disc 5 as previously described. A point 612 represents the start of a jump pulse. The uncompensated tracking error is increasing to a first maximum indicated at 614. The region between 612 and 614 shows an increase in tracking error indicating the departure of the read beam from the track being read. From point 614, the differential tracking error signal drops to a point indicated at 616 which represents the mid-point of an information track as shown at point 426 in line A of Figure 4. However, the distance traveled by the read beam between points 612 and 616 on curve A in Figure 7B is a movement of 0.8 microns and is equal to length of line 617. The uncompensated radial tracking error rises to a second maximum at point 618 as the read beam begins to approach the next adjacent track 423. The tracking error reaches zero at point 622 but in unable to stop and continues to a new maximum at 624. The radial tracking mirror 28 possesses sufficient inertia so that, were it not for the compensation pulse, the mirror would not be able to stop in response to the differential tracking error signal detecting a zero error at point 622 as the read beam crosses the next adjacent information track. Accordingly, the raw tracking error would increase to a point indicated at 624 wherein the closed loop servoing effect of the tracking servo subsystem slows the mirror down and brings the read beam back towards the information track represented by the zero crossing differential tracking error as indicated at point 625. Additional peaks are identified at 626 and 628. These show a gradual damping of the differential tracking error as the radial tracking mirror becomes gradually positioned in its proper location to generate a zero tracking error, such as at points 612, 622, 625. Additional zero crossing locations are indicated at 630 and 632. The portion of the waveform shown in line A existing after point 632 shows a gradual return of the raw tracking error to its zero position as the read spot gradually comes to rest on the next adjacent track 423.

Point 616 represents a false indication of zero tracking error as the read beam passes over the centre 426 of the region between adjacent tracks 424 and 423.

For optimum operation of jump motion, wherein the read beam jumps to the next adjacent track, the time allowed for the radial tracking mirror 28 to reacquire proper radial tracking is 300 microseconds. This is indicated by the length of the line 634 shown on line B of Figure 7B. By observation, it can be seen that the radial tracking mirror 28 has not yet reacquired zero radial error position at the expiration of the 300 microsecond time period. Obviously, if more time were available to achieve this result, the waveform shown at A in Figure 7B would be suitable for those systems having more time for the radial tracking mirror to reacquire zero differential tracking error on the centre of the next adjacent track.

Referring briefly to line D of Figure 7B line 634 is redrawn to indicate that the compensated radial tracking error signal shown in line D does not include those large peaks shown with reference to line A. The compensated differential tracking error shown in line D is capable of achieving proper radial tracking by the tracking servo subsystem within the time frame allowed for proper operation of the video disc player 1. Referring briefly to line E of Figure 7A, the remaining tracking error signal available after interruption by the loop interrupt pulse is of the proper direction to cooperate with the jump motion compensation pulses described hereinafter to bring the radial tracking mirror to its optimum radial tracking position as soon as possible.

The stop motion compensation generator 573 shown with reference to Figure 6, applies the waveform shown in line E of Figure 7B to the radial tracking mirror 28 by way of the line 106 and the amplifier 500 shown in Figure 5. The jump pulse directs the radial tracking mirror 28 to leave the tracking of one information track and begin to seek the tracking of the next adjacent track. In response to the pulse from the zero crossing detector 571 shown in Figure 6, the jump pulse generator 567 is caused to generate the stop motion compensation pulse shown in line E.

Referring to line E of Figure 7B, the stop motion compensation pulse waveform comprises a plurality of individual and separate regions indicated at 640, 642 and 644, respectively. The first region 640 of the jump motion compensation pulse begins as the differential uncompensated radial tracking error at point 616 crosses the zero reference level, indicating that the mirror is in a mid-track crossing situation. At this time, the jump compensation generator 573 generates the first portion 640 of the compensation pulse which is applied directly to the tracking mirror 28. The generation of the first portion 640 of the stop motion compensation pulse has the effect of reducing the peak 624 to a lower radial tracking displacement as represented by the new peak 624' as shown in line B. It should be kept in mind that the waveforms shown in Figure 7B are schematic only to show the overall interrelationship of the various pulses used in the tracking servo subsystem and the jump motion subsystem to cause a read beam to jump from one track to the next adjacent track. Since the peak error 624' is not as high as the error at peak 624, this has the effect of reducing the error at peak error point 626' and generally shifting the remaining portion of the waveform to the left such that the zero crossing at 625', 630' and 632' all occur sooner than they would have occurred without the presence of the stop motion compensation pulse.

Referring back to line E of Figure 7B, the second portion 642 of the stop motion compensation pulse is of a second polarity when compared to the first region 640. The second portion 642 of the stop motion compensation pulse occurs at a point in time to compensate for the tracking error peak shown at 626' of line B. This results in an even smaller radial tracking error being generated at that time and this smaller radial tracking error is represented as point 626" on line C. Since the degree of the radial tracking error represented by the point 626" of line C is significantly smaller than that shown with reference to point 626' of line B, the maximum error in the opposite direction shown at point 626" is again significantly smaller than that represented at point 626 of line A. This counteracting of the natural tendency of the radial tracking mirror 28 to oscillate back and forth over the information track is further dampened as indicated by the further movement to the left of points 626", 628" and 632" with reference to their relative locations shown in lines B and A.

Referring again to line E of Figure 7B and the third region 644 of the compensation pulse, this region 644 occurs at the time calculated to dampen the remaining long term tracking error as representing that portion of the error signal to the right of the zero crossing point 632" shown in line C. Region 644 is shown to be approximately equal and opposite to the error signal which would exist if the portion 644 of compensation pulse did not exist. Referring to line D of Figure 7B, there is shown the differential and compensated radial tracking error representative of the motion of the light beam as it is caused to depart from one information track being read to the next adjacent track under the control of a jump motion pulse and a stop motion compensation pulse. It should be noted that the waveform shown in line D of Figure 7B can represent the movement in either direction although the polarity of various signals would be changed to represent the different direction of movement.

The cooperation between the jump motion subsystem 44 and the tracking servo subsystem 40 during a jump motion period will now be described with reference to Figures 5 and 6 and their related waveforms. Referring to Figure 5, the tracking servo subsystem 40 is in operation just prior to the initiation of a jump pulse to maintain the radial tracking mirror 28 in its position centred directly above an information track. In order to maintain this position, the differential tracking error is detected in the signal recovery subsystem 30 and applied to the tracking servo subsystem 40 by the lines 42 and 46. In this present operating mode, the differential tracking error passes directly through the tracking servo loop switch 480, the amplifier 510 and the push/pull amplifiers 500. That portion of the waveform shown at 591 on line D of Figure 7A is being traversed.

The function generator 47 generates a jump motion mode signal for application to the stop motion mode gate 569 (Figure 6) the over line 132. The function of the stop motion mode gate 569 is to generate a pulse in response to the proper location in a television frame for the jump mode to occur. This point is detected by the combined operation of the total video signal from the FM processing subsystem 32 being applied to the white flag detector 556 over the line 134 in combination with the vertical sync pulse developed in the tangential servo subsystem 80 and applied over the line 92. The window generator 562 provides an enabling signal which corresponds with a predetermined portion of the video signal containing the white flag indicator. The white flag pulse applied to the stop motion mode gate 569 is gated to the jump pulse generator 567 in response to the enabling signal received from the function generator 47 over the line 132. The enabling signal from the stop motion mode gate 569 initiates the jump pulse as shown with reference to line C of Figure 7A. The output from the zero crossing detector 571 indicates the end of the jump period by application of a signal to the jump pulse generator 567 over the line 572. The jump pulse from the generator 567 is applied to the tracking servo loop interrupt switch 480 (Figure 5) by way of the gate 482 and the line 108. The function of the tracking servo loop interrupt switch 480 is to remove the differential tracking error currently being generated in the signal recovery subsystem 30 from the push/pull amplifiers 500 driving the radial tracking mirror 28. Accordingly, the switch 480 opens and the differential tracking error is no longer applied to the amplifiers 500 for driving the radial tracking mirror 28. Simultaneously, the jump pulse from the generator 567 (Figure 6) is applied to the amplifiers 500 (Figure 5) over the line 104. The jump pulse, in essence, is substituted for the differential tracking error and provides a driving signal to the push/pull amplifiers 500 for starting the read spot to move to the next adjacent information track to be read.

The jump pulse from the generator 567 (Figure 6) is also applied to the jump motion compensation sequence generator 573 wherein the waveform shown with reference to line H of Figure 7A and line E of Figure 7B is generated. By inspection of line H, it is to be noted that the compensation pulse shown on line H occurs at the termination of the loop interrupt pulse on line G, which loop interrupt pulse is triggered by the start of the jump pulse shown on line C. The compensation pulse is applied to the push/pull amplifiers 500, over the line 106 shown in Figures 5 and 12, for damping out any oscillation in the operation of radial tracking mirror 28 caused by the application of the jump pulse.

The compensation pulse is initiated at the termination of the loop interrupt signal. Simultaneously there with, the tracking servo loop interrupt switch 480 closes and allows the differential tracking error to be reapplied to the push/pull amplifiers 500. The typical waveform available at this point is shown in line E of Figure 7A which cooperates with the stop motion compensation pulse to quickly bring the radial tracking mirror 28 into suitable radial tracking alignment.

Referring briefly to line A of Figure 7C, two frames of television video information being read from the video disc 5 are shown. Line A represents the differential tracking error signal having abrupt discontinuities located at 650 and 652 representing the jump mode of operation. Discontinuities of smaller amplitude are shown at 654 and 656 to show the effect of errors on the surface of the video disc surface in the differential tracking error signal. Line B of Figure 7C shows the FM envelope as it is read from the video disc surface. The jump motion periods at 658 and 660 show that the FM envelope is temporarily interrupted as the reading spot jumps tracks. Changes in the FM envelope at 662 and 664 show the temporary loss of FM as tracking errors cause the tracking beam to temporarily leave the information track.

To summarise the jump motion mode of operation, the following combinations occur. The differential tracking error signal is removed from the tracking mirror 28 and a jump pulse is substituted therefor to cause the radial tracking mirror to jump one track from that track being tracked. The jump pulse has areas of preemphasis such as to help the radial tracking mirror to regain tracking of the new track to which it has been positioned.

The duration of the loop interrupt pulse is varied for gating off the application of the differential tracking error into the push/pull amplifiers 500.

Suitable delays can be entered into this loop to remove any extraneous signals that may slip through due to misalignment of the beginning of the jump pulse and the detection of zero crossings in the detector 571.

The jump pulse is ended at the first zero crossing detected after the beginning of the jump.

The differential tracking error is reapplied into the tracking servo subsystem after the end of the jump pulse and acts in co-operation with the compensation signal to stop the beam on the second track.

The jump motion compensation sequence is initiated with the termination of the loop interrupt pulse when the differential tracking error is reapplied into the tracking servo subsystem 40. The jump motion compensation pulse can be entered into the tracking servo subsystem over the line 106 at a period fixed in time from the beginning of the jump pulse as opposed to the ending of the loop interrupt pulse. The jump motion compensation sequence comprises a plurality of separate and distinct regions. In the preferred embodiment, the first region opposes the tendency of the tracking mirror to overshoot the next adjacent track and directs the mirror back into radial tracking of that next adjacent particular track. A second region is of lower amplitude than the first region and of opposite polarity to further compensate the motion of the radial tracking mirror as the spot again overshoots the centre portion of the next adjacent track but in the opposite direction. The third region of the stop motion compensation sequence is of the same polarity as the first region, but of significantly lower amplitude to further compensate any tendency of the radial tracking mirror having the focus spot again leave the information track.

The jump motion sequence has been described consisting of separate individual regions; and it is possible for these regions to be themselves broken down into individual pulses. It has been found by experiment that the various regions can provide enhanced operation when separated by zero level signals. More specifically, a zero level condition exists between region one and region two allowing the radial tracking mirror to move under its own inertia without the constant application of a portion of the compensation pulse. It has also been found by experiment that this quiescent period of the compensation sequence can coincide with the reapplication of the differential tracking error to the radial tracking mirrors. In this sense, region one, shown at 640, of the compensation sequence cooperates with the portion 604 shown in line E of Figure 7A from the differential tracking error input into the tracking loop. However, in either case the compensation signal is of fixed duration.

By observation of the compensation waveform shown in line E of Figure 7B, it can be observed that the various regions tend to begin at a high amplitude and fall off to very low compensation signals. It can also be observed that the periods of the various regions begin at a first relatively short time period and gradually become longer in duration. This coincides with the energy contained in the tracking mirror as it seeks to regain radial tracking. Initially in the track jumping sequence, the energy is high and the early portions of the compensation pulse are appropriately high to counteract this energy. Thereafter, as energy is removed from the tracking mirror, the corrections become less so as to bring the radial tracking mirror back into radial alignment as soon as possible.

## Claims

1. A tracking method for a player for recovering information from any one of a plurality of spaced information tracks (9) on an information-bearing surface (7), the player including means (2) for providing a beam (4) of radiation, and means for imparting relative movement between the surface and the beam, the tracking method comprising steps of: directing the beam of radiation along a prescribed path using beam steering means (28), to impinge on the information-bearing surface; and coupling a tracking error signal to the beam steering means, in a first mode of operation, to controllably position the beam of radiation in alignment with a first track on the surface; uncoupling the tracking error signal from the beam steering means, in a second mode of operation, and coupling a jump signal to the beam steering means, to controllably move the beam of radiation toward a second track on the surface; and determining when the beam of radiation has been moved to a prescribed position intermediate the first track and the second track, and terminating the jump signal at that time; and coupling a compensation signal to the beam steering means in a third mode of operation to decelerate the beam as it approaches the second track, characterized in that the compensation signal is of a fixed duration and further characterized by recoupling the tracking error signal to the beam steering means for the termination of the jump signal and before the beam reaches the second track such that the tracking error signal has the proper polarity to drive the beam to the second track, whereby the tracking error signal cooperates with the compensation signal to stop the beam on the second track.

2. The method as claimed in Claim 1, wherein the first mode of operation is resumed and the tracking error signal is recoupled to the beam steering means (28) a fixed time period after the jump signal.

3. The method as claimed in either of the preceding claims, wherein the compensation signal includes a plurality of pulses of alternating polarity and of decreasing amplitude.

4. The method as claimed in any of the preceding claims, wherein the compensation signal begins a fixed period of time after the jump signal.

5. A tracking system in a player for recovering information from any of a plurality of spaced information tracks (9) on an information-bearing surface (7), the player including means (2) for providing a beam (4) of radiation and means for imparting relative movement between the surface and the beam, the tracking system comprising: beam steering means (28) for directing the beam of radiation along a prescribed path to impinge on the information-bearing surface; and control means (567) for coupling a tracking error signal to the beam steering means, in a first mode of operation, to controllably position the beam of radiation in alignment with a first track on the surface, the control means further operating, in a second mode of operation, to uncouple the tracking error signal from the beam steering means, and to couple a jump signal to the beam steering means, to controllably move the beam of radiation away from the first track and toward a second track on the surface, the control means including detector means for determining when the beam of radiation has been moved to a prescribed position intermediate the first track and the second track, and for terminating the jump signal at that time, the control means further operating, in a third mode of operation, to couple a compensation signal to the beam steering means to decelerate the beam as it approaches the second track, characterized in that the compensation signal is of a fixed duration and further characterized in that said control means recouples the tracking error signal to the beam steering means after the termination of the jump pulse and before the beam reaches the second track, such that the tracking error signal has the proper polarity to drive the beam to the second track, whereby the tracking error signal cooperates with the compensation signal to stop the beam on the second track.

## Revendications

1. Procédé suiveur pour un tourne-disque pour récupérer l'information de l'une parmi un certain nombre des pistes espacées de l'information (9) sur une surface porteuse de l'information (7), le tourne-disque comprenant un moyen (2) pour produire un faisceau (4) de rayonnement, et un moyen pour impartir un mouvement relatif entre la surface et le faisceau, le procédé suiveur comprenant les étapes de: diriger le faisceau de rayonnement le long d'un trajet prescrit en utilisant un moyen de guidage du faisceau (28), pour faire impact sur la surface porteuse de l'information; et coupler un signal d'erreur de poursuite au moyen de guidage du faisceau, dans un premier mode de fonctionnement, pour placer de manière réglable le faisceau de rayonnement en alignement avec une première piste sur la surface; découpler le signal d'erreur de poursuite du moyen de guidage du faisceau, dans un second mode de fonctionnement, et coupler un signal de saut au moyen de guidage du faisceau, pour déplacer de manière réglable le faisceau de rayonnement vers une seconde piste à la surface; et déterminer le moment où le faisceau de rayonnement a été déplacé à une position prescrite entre la première piste et la seconde piste, et terminer le signal de saut à ce moment; et coupler un signal de compensation au moyen de guidage du faisceau dans un troisième mode de fonctionnement pour décélérer le faisceau tandis qu'il s'approche de la seconde piste, caractérisé en ce que le signal de compensation est de durée fixe et caractérisé de plus par le recouplage du signal d'erreur de poursuite au moyen de guidage du faisceau après la fin du signal de saut et avant que le faisceau n'atteigne la seconde piste de façon que le signal d'erreur de poursuite ait la polarité appropriée pour entraîner le faisceau vers la seconde piste, ainsi le signal d'erreur de poursuite coopère avec le signal de compensation pour arrêter le faisceau sur la seconde piste.

2. Procédé selon la revendication 1, où le premier mode de fonctionnement reprend et le signal d'erreur de poursuite est recouplé au moyen de guidage du faisceau (28) en une période fixe de temps après le signal de saut.

3. Procédé selon l'une quelconque des revendications précédentes, où le signal de compensation comprend un certain nombre d'impulsions de polarité alternée et d'amplitude décroissante.

4. Procédé selon l'une quelconque des revendications précédentes, où le signal de compensation commence en une période fixe de temps après le signal de saut.

5. Système suiveur dans un tourne-disque pour récupérer l'information de l'une parmi un certain nombre de pistes espacées de l'information (9) sur une surface porteuse de l'information (7), le tourne-disque comprenant un moyen (2) pour produire un faisceau (4) de rayonnement et un moyen pour impartir un mouvement relatif entre la surface et le faisceau, le système suiveur comprenant: un moyen de guidage du faisceau (28) pour diriger le faisceau de rayonnement le long d'un trajet prescrit pour qu'il fasse impact sur la surface porteuse de l'information; et un moyen de commande (567) pour coupler un signal d'erreur de poursuite au moyen de guidage du faisceau, dans un premier mode de fonctionnement, pour placer de manière réglable le faisceau de rayonnement en alignement avec la première piste à la surface, le moyen de commande servant de plus, dans un second mode de fonctionnement, à découpler le signal d'erreur de poursuite du moyen de guidage du faisceau, et à coupler un signal de saut au moyen de guidage du faisceau, pour déplacer de manière réglable le faisceau de rayonnement au loin de la première piste et vers une seconde piste à la surface, le moyen de commande comprenant un moyen détecteur pour déterminer le moment où le faisceau de rayonnement a été déplacé à une position prescrite entre la première piste et la seconde piste, et pour terminer le signal de saut à ce moment, le moyen de commande servant de plus, dans un troisième mode de fonctionnement, à coupler un signal de compensation au moyen de guidage du faisceau pour décélérer le faisceau tandis qu'il s'approche de la seconde piste, caractérisé en ce que le signal de compensation est d'une durée fixe et caractérisé de plus en ce que ledit moyen de commande recouple le signal d'erreur de poursuite au moyen de guidage du faisceau après la fin de l'impulsion de saut et avant que le faisceau n'atteigne la seconde piste, de façon que le signal d'erreur de poursuite ait la polarité appropriée pour entraîner le faisceau vers la seconde piste, ainsi le signal d'erreur de poursuite coopère avec le signal de compensation pour arrêter le faisceau sur la seconde piste.

**Patentansprüche**

1. Spurfolgeverfahren für ein Wiedergabegerät zum Auslesen von Information aus einer beliebigen von mehreren, mit gegenseitigem Abstand angeordneten Informationsspuren (9) auf einer informationstragenden Oberfläche (7), wobei das Wiedergabegerät Vorrichtungen (2) enthält, die ein Strahlenbündel (4) erzeugen, sowie Vorrichtungen, die das Strahlenbündel relativ zur Oberfläche bewegen, mit den folgenden Verfahrenschritten:
— Führen des Strahlenbündels unter Verwendung von Bündelsteuerungsmitteln (28) längs eines vorbestimmten Pfades bis zum Auftreffen auf die informationstragende Oberfläche;
— Koppeln eines Spurfehlersignals an die Bündelsteuerungsmittel, um in einer ersten Betriebsweise das Strahlenbündel gesteuert auf eine erste Spur auf der Oberfläche zu justieren;
— Entkoppeln des Spurfehlersignals von den Bündelsteuerungsmitteln in einer zweiten Betriebsweise und Ankoppeln eines Sprungsignals an die Bündelsteuerungsmittel, um das Strahlenbündel gesteuert auf eine zweite Spur auf der Oberfläche zu verschieben;
— Feststellen, wann das Strahlenbündel zu einer vorbestimmten Position zwischen der ersten und der zweiten Spur verschoben wurde und Beenden des Sprungsignals zu diesem Zeitpunkt;
— Ankoppeln eines Kompensationssignals an die Bündelsteuerungsmittel in einer dritten Betriebsweise, um das Strahlenbündel abzubremsen, wenn es sich der zweiten Spur nähert;
dadurch gekennzeichnet, daß das Kompensationssignal eine feste Dauer aufweist, und weiterhin dadurch, daß das Spurfehlersignal zu den Bündelsteuerungsmitteln zurückgekoppelt wird, nachdem das Sprungsignal beendet ist und bevor das Strahlenbündel die zweite Spur erreicht, so daß das Spurfehlersignal die richtige Polarität aufweist, um das Strahlenbündel zur zweiten Spur zu führen, wobei das Spurfehlersignal mit dem Kompensationssignal zusammenwirkt, um das Strahlenbündel auf der zweiten Spur zu stoppen.

2. Verfahren nach Anspruch 1, wonach eine bestimmte Zeit nach dem Sprungsignal die erste Betriebsweise wieder aufgenommen und das Spurfehlersignal wieder an die Bündelsteuerungsmittel angelegt wird.

3. Verfahren · nach einem der vorstehenden Ansprüche, wonach das Kompensationssignal eine Vielzahl von Impulsen mit alternierender Polarität und abnehmender Amplitude enthält.

4. Verfahren nach einem der vorstehenden Ansprüche, wonach das Kompensationssignal zu einer vorgegebenen festen Zeitdauer nach dem Sprungsignal beginnt.

5. Spurfolgesystem in einem Wiedergabegerät zum Auslesen von Information aus einer beliebigen von mehreren, mit gegenseitigen Abständen angeordneten Informationsspuren (9) auf einer informationstragenden Oberfläche (7), wobei das Wiedergabegerät Vorrichtungen (2) enthält, die ein Strahlenbündel (4) erzeugen sowie Vorrichtungen, die das Strahlenbündel relativ zur Oberfläche bewegen, mit folgenden Bestandteilen:

— Bündelsteuerungsmittel (28), mit denen das Strahlenbündel längs eines vorbestimmten Pfades bis zum Auftreffen auf die informationstragende Oberfläche geführt wird;

— Steuervorrichtungen (567), mit denen in einer ersten Betriebsweise ein Spurfehlersignal an die Bündelsteuerungsmittel gekoppelt wird, um das Strahlenbündel gesteuert auf eine erste Spur auf der Oberfläche auszurichten und mit denen weiter in einer zweiten Betriebsweise das Spurfehlersignal von den Bündelsteuerungsmitteln abgekoppelt und ein Sprungsignal an die Bündelsteuerungsmittel angekoppelt wird, um das Strahlenbündel gesteuert von der ersten Spur weg in Richtung auf die zweite Spur zu verschieben, wobei die Steuermittel Detektorvorrichtungen enthalten, die feststellen, wann das Strahlenbündel bis zu einer Zwischenposition zwischen der ersten und der zweiten Spur verschoben wurde und die das Sprungsignal zu diesem Zeitpunkt beenden, und wobei die Steuermittel weiterhin in einer dritten Betriebsart ein Kompensationssignal an die Bündelsteuerungsmittel ankoppeln, um das Strahlenbündel abzubremsen, wenn es sich der zweiten Spur nähert, dadurch gekennzeichnet, daß das Kompensationssignal eine fest Dauer aufweist und weiterhin dadurch, daß die Steuermittel das Spurfehlersignal nach Beendigung des Sprungimpulses und vor dem Zeitpunkt, an dem das Strahlenbündel die zweite Spur erreicht, beenden, so daß das Spurfehlersignal die richtige Polarität aufweist, um das Strahlenbündel zur zweiten Spur zu führen wobei das Spurfehlersignal mit dem Kompensationssignal zusammenwirkt, um das Strahlenbündel auf der zweiten Spur zu stoppen.

FIG.1

FIG. 2

FIG. 3

FIG. 4

FIG. 5

FIG. 7C

FIG. 6

FIG. 7A

FIG. 7B